Europäisches Patentamt

European Patent Office

Office européen des brevets

(19)

(11) Veröffentlichungsnummer: **0 081 742**
**B1**

(12) # EUROPÄISCHE PATENTSCHRIFT

(45) Veröffentlichungstag der Patentschrift:
**29.10.86**

(51) Int. Cl.⁴: **A 01 B 61/04,** A 01 B 35/24

(21) Anmeldenummer: **82111081.4**

(22) Anmeldetag: **01.12.82**

(54) **Über ein Feld vorwärts bewegbares Bodenbearbeitungsgerät.**

(30) Priorität: **02.12.81 US 326735**

(43) Veröffentlichungstag der Anmeldung:
**22.06.83 Patentblatt 83/25**

(45) Bekanntmachung des Hinweises auf die Patenterteilung:
**29.10.86 Patentblatt 86/44**

(84) Benannte Vertragsstaaten:
**DE FR GB**

(56) Entgegenhaltungen:
US - A - 2 850 956
US - A - 2 906 353
US - A - 3 098 529
US - A - 3 486 566
US - A - 4 078 615

(73) Patentinhaber: **DEERE & COMPANY, 1 John Deere Road, Moline Illinois 61265 (US)**

(72) Erfinder: **Long, John David, R.R. 2, Box 371A 8975 N.W., Polk City Dr., Ankeny Iowa 50021 (US)**
Erfinder: **Stevens, Phillip Eugene, 409 S.E. Fifth, Ankeny Iowa 50021 (US)**

(74) Vertreter: **Fricke, Joachim, Dr. et al, Dr. R. Döring, Dr. J. Fricke, Patentanwälte Josephspitalstrasse 7, D-8000 München 2 (DE)**

**Beschreibung**

Die Erfindung betrifft ein Bodenbearbeitungsgerät mit den Merkmalen des Oberbegriffs des Anspruchs 1.

Ein solches Bodenbearbeitungsgerät ist aus der US-A-3 486 566 bekannt. Bei diesem bekannten Gerät ist die Verbindungsanordnung direkt mit dem rückwärtigen Federwiderlager der Vorspannfederanordnung verbunden. Dabei ist die Anordnung so getroffen, dass in einer mittleren Stellung des Bodenbearbeitungswerkzeuges sich die Vorspannfederanordnung in einer oberen Totpunktlage befindet, so dass sie in dieser Stellung keinerlei Rückstellkraft auf die Trageinrichtung des Bodenbearbeitungswerkzeuges mehr ausübt. Über diese Totpunktlage kann das Bodenbearbeitungswerkzeug weiter hinaus angehoben werden, wobei die Vorspannfederanordnung bestrebt ist, das Bodenbearbeitungswerkzeug in Richtung auf die maximale Aushebestellung vorzuspannen. Beim Anheben des Bodenbearbeitungswerkzeuges aus seiner Arbeitsstellung in die mittlere Stellung nimmt die Federkraft der Vorspannfederanordnung, welche bemüht ist, das Bodenbearbeitungswerkzeug in seiner Arbeitsstellung zu halten, nur schwach zu. Bei dieser Anhebebewegung nimmt gleichzeitig der Momentarm der Kraft der Vorspannfederanordnung fortlaufend ab, bis er in der mittleren Stellung oder in der Totpunktlage etwa den Wert Null erreicht. In der gleichen Zeit nimmt auch der an dem Bodenbearbeitungswerkzeug angreifende Kraftarm der Aushebekraft ab, jedoch weniger schnell als der Momentarm der Kraft der Vorspannfederanordnung. Von der mittleren- oder Totpunktstellung bis zur maximalen Aushebestellung nimmt zwar die werksame Federkraft wieder zu, wirkt jedoch in der entgegengesetzten Richtung, d. h. in Richtung auf die maximale Aushebestellung.

Bei einem anderen Bodenbearbeitungsgerät nach der US-A-2 906 353 ist die Anordnung dagegen so getroffen, dass die elastische wirksame Rückstellkraft im erheblichen Masse zunimmt, wenn der Tragarm der Trageinrichtung bei Auftreffen des Bodenbearbeitungswerkzeuges auf ein Bodenhindernis nach oben und nach rückwärts ausweicht. Bei diesem bekannten Bodenbearbeitungsgerät kann beispielsweise diese wirksame Rückstellkraft in der maximalen Aushebestellung das 3- bis 5-fache der in der Arbeitsstellung wirksamen Federvorspannung betragen. Diese starke Zunahme der Rückstellkraft erfordert entsprechend kräftig ausgebildete schwere Rahmen. Will man die maximale Rückstellkraft in Grenzen halten, muss bei diesem bekannten Bodenbearbeitungsgerät von einer entsprechend verringerten Federvorspannung in der Arbeitsstellung des Bodenbearbeitungswerkzeuges ausgegangen werden. Dies verringert jedoch die Stabilität der Lage des Bodenbearbeitungswerkzeuges in der Arbeitsstellung. So wird eine hohe Vorspannkraft in der Arbeitsstellung vor allem auch benötigt, wenn derartige Bodenbearbeitungsgeräte mit starken Ackerschleppern gezogen werden, damit die Bodenbearbeitungswerkzeuge ausreichend tief in den Boden eindringen können. Dies gilt vor allem auch bei relativ hohen Fahrgeschwindigkeiten des Ackerschleppers.

Der Erfindung liegt die Aufgabe zugrunde, ein Bodenbearbeitungsgerät mit den Merkmalen des Oberbegriffs des Anspruchs 1 so weiterzubilden, dass in der Bearbeitungsstellung eine ausreichend hohe Federvorspannung auf das Bodenbearbeitungswerkzeug wirksam ist, um die aufgezeigten Nachteile einer zu niedrigen Vorspannung zu vermeiden, so dass auch bei hohen Fahrgeschwindigkeiten des Ackerschleppers eine ausreichend grosse Bodeneindringtiefe der Bodenbearbeitungswerkzeuge gewährleistet ist, wobei jedoch gewährleistet werden soll, dass die maximal wirksame Rückstellkraft im erheblichen Umfange begrenzt bleibt, so dass das Bodenbearbeitungsgerät mit einem leichteren Geräterahmen ausgebildet werden kann.

Diese Aufgabe wird durch die Massnahmen des Anspruchs 1 gelöst.

Die besondere Lage der Gelenkstelle der schwenkbaren Verbindungsanordnung in der Arbeitsstellung des Bodenbearbeitungswerkzeuges führt zu einem in der Arbeitsstellung grossen wirksamen Momentarm der Kraft der Vorspannfederanordnung. Die Wegstrecke, die der Tragarm nach oben schwingen muss, bevor diese Gelenkstelle die die erste und zweite Querachse enthaltende Ebene durchdringt, ist dabei relativ gross. Dadurch ergibt sich, dass bei Beginn der Aushebeschwenkbewegung des Tragarmes der Kraftarm der Aushebekraft zunächst schneller abnimmt als der Momentarm der Vorspannfederanordnung. Dadurch nimmt die wirksame Rückstellkraft zunächst bis zum Erreichen einer mittleren Aushebestellung zu. Im weiteren Verlauf der Aushebebewegung von der mittleren Aushebestellung aus nimmt dagegen der Momentarm der Vorspannfederanordnung schneller ab als der Kraftarm der Aushebekraft. Aufgrund dieser Wirkung kann die maximal wirksame Rückstellkraft im erheblichen Masse begrenzt und dennoch gewährleistet werden, dass sie in der Arbeitsstellung des Bodenbearbeitungswerkzeuges einen für alle Verhältnisse ausreichend hohen Wert aufweist. Dies wird bei leichter Ausbildung des Gerätes gewährleistet, wodurch das Gerät leichter zu handhaben und billiger herzustellen ist. Dazu kommt, dass die Wirkung mit einer Vorspannfederanordnung von relativ schwacher Federkraft erreicht wird.

Die hohe anfängliche wirksame Rückstellkraft gewährleistet ein zuverlässiges Arbeiten bei ausreichender Eindringtiefe des Bodenbearbeitungswerkzeuges in den Boden auch bei relativ hohen Fahrgeschwindigkeiten des Ackerschleppers.

Die Anordnung vereinfacht sich weiterhin, wenn nach der Massnahme des Anspruchs 2 vorgegangen wird. Hierdurch lassen sich die auftretenden Kräfte in engen Grenzen halten und eine besonders leichte Rahmenkonstruktion für das Bodenbearbeitungsgerät verwenden. Dies gilt im verstärkten Masse bei der Begrenzung der in der maximalen Aushebestellung wirksamen Rückstellkraft nach Anspruch 3.

Die Lehre nach Anspruch 1 und die damit bezweckte Wirkung lässt sich besonders einfach bei gedrungener Anordnung durch die Massnahmen des Anspruchs 4 verwirklichen. Dabei kann das rückwärtige Federwiderlager zugleich einen wirksamen mechanischen Schutz für die verwendete Feder bilden, wenn dieses Federwiderlager nach Anspruch 5 ausgebildet ist.

Die Massnahme nach Anspruch 6 gibt eine einfache Orientierung für die Ausbildung und Bemessung der Feder in Bezug auf die Bemessung des U-förmigen Bügelteils, der das rückwärtige Federwiderlager bildet.

Die Begrenzung der maximalen Aushebestellung des Tragarmes des Bodenbearbeitungswerkzeuges lässt sich auf einfache Weise nach der Lehre des Anspruchs 7 erreichen, wobei die Aushebebewegung des Tragarmes zugleich den die Begrenzung bewirkenden Anschlag steuert.

Die Erfindung wird nachfolgend anhand schematischer Zeichnungen an einem Ausführungsbeispiel näher erläutert.

Es zeigen:

Figur 1 in perspektivischer Darstellung und im Ausschnitt ein Bodenbearbeitungsgerät gemäss der Erfindung,

Figur 2 in grösserem Massstabe und Seitenansicht eine Befestigungseinrichtung, mittels der die Trageinrichtung für das Bodenbearbeitungswerkzeug an dem Rahmen des Bodenbearbeitungsgerätes befestigbar ist,

Figur 3 im Ausschnitt eine Einzelheit der Trageinrichtung, und zwar im Schnitt entlang der Schnittlinie III–III der Figur 2,

Figur 4 in Draufsicht Teil einer Vorspannfederanordnung,

Figur 5 den Teil nach Fig. 4 in Seitenansicht,

Figur 6 den Teil nach Fig. 4 in Stirnansicht entsprechend den Pfeilen VI–VI der Figur 5,

Figur 7 eine Bodenansicht des Teils nach Fig. 4,

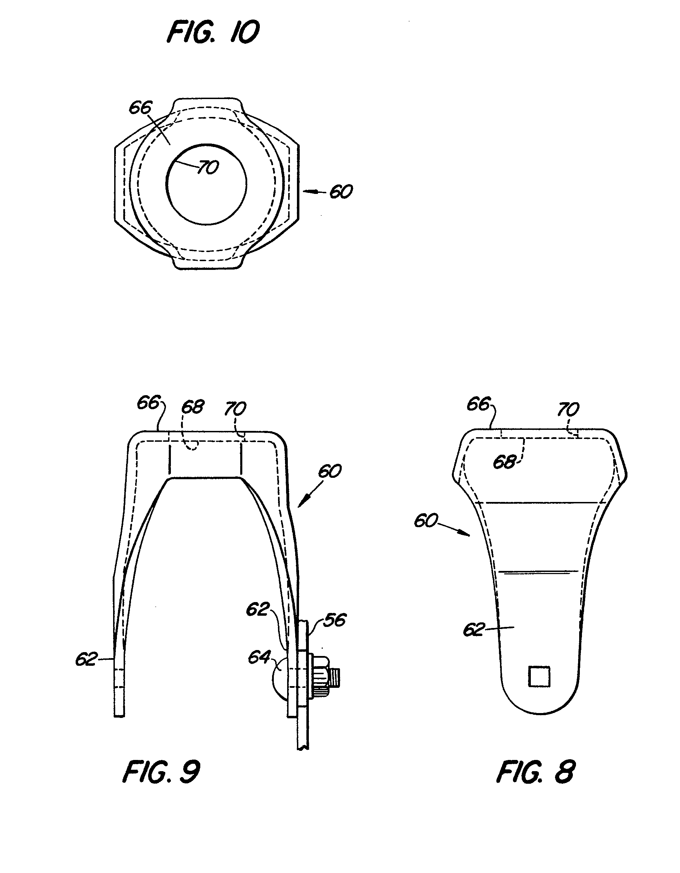

Figur 8 eine Seitenansicht des rückwärtigen Federwiderlagers der Vorspannfederanordnung,

Figur 9 eine Draufsicht des Federwiderlagers nach Fig. 8,

Figur 10 eine rückwärtige Stirnansicht des Federwiderlagers nach Fig. 8,

Figur 11 die Anordnung nach Fig. 2 in vereinfachter Darstellung in zwei verschiedenen Stellungen des Tragarmes und

Figur 12 ein Schaubild, welches die Kraft-Wegkurven des Bodenbearbeitungsgerätes nach Fig. 2 im Vergleich zu den Kurven bekannter Bodenbearbeitungsgeräte zeigt.

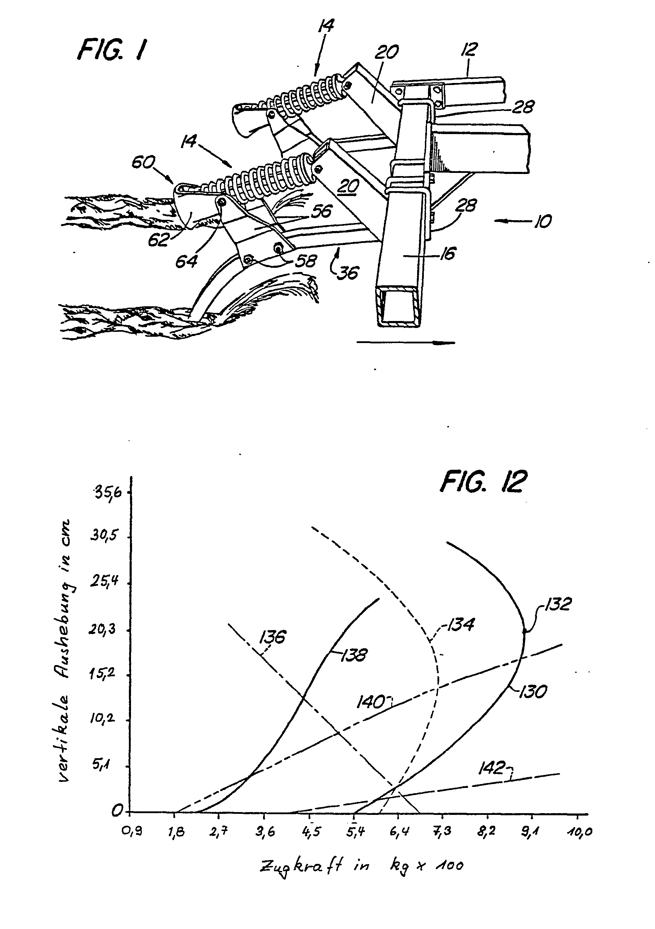

Das in Fig. 1 im Ausschnitt gezeigte Bodenbearbeitungsgerät 10 kann mit Hilfe eines Ackerschleppers in Richtung des Pfeiles über den Acker gezogen werden. Es wird angenommen, dass das Bodenbearbeitungsgerät mit Bodenbearbeitungswerkzeugen 18 in Form eines Meisselpfluges oder dgl. ausgerüstet ist. Für jedes Bodenbearbeitungswerkzeug 18 ist eine Trageinrichtung 14 vorgesehen. Diese sind in gegenseitigen Abständen an einem Rahmen 12, 16 befestigt. Von dem Bodenbearbeitungswerkzeug 18 wird erwartet, dass es in der Arbeitsstellung auch in schwere Böden tief eindringt und erhebliche in Richtung eines Aushebens des Bodenbearbeitungswerkzeuges wirkende Aushebekräfte F aufnehmen und sicher auf den Rahmen 12, 16 übertragen kann. Dies gilt insb. für die Fälle, in denen das Bodenbearbeitungsgerät von schweren Ackerschleppern mit hoher Geschwindigkeit über das Feld gezogen wird.

Jede Trageinrichtung 14 weist eine Befestigungseinrichtung 20, 28 auf. Im dargestellten Beispiel weist diese einen kanalförmigen Profilteil mit einem unteren Ende 22 und einem oberen Ende 24 auf. Das untere, in Fahrtrichtung vorne liegende Ende 22 weist auf seiner Oberseite einen rechtwinkeligen Ausschnitt 26 auf, der einen Rahmenteil von quadratischem Querschnitt teilweise aufnimmt. Die Befestigung an diesem Rahmenteil erfolgt mit Hilfe eines Bügels 28, dessen Gewindeenden in Aufnahmen 30 greifen und dort mittels Muttern 32 festgelegt sind.

Das Bodenbearbeitungswerkzeug 18 ist am unteren und rückwärtigen Ende 50 eines Tragarmes 36 mittels Gewindebolzen 52 befestigt. An seinem oberen vorderen Ende weist der Tragarm ein Lagerauge 40 auf, mit dem der Tragarm 36 um eine Querachse 42 am unteren Ende der Befestigungseinrichtung 20, 28 verschwenkbar gelagert ist, so dass der Tragarm 36 in einer im wesentlichen senkrechten Ebene bewegbar ist. Im dargestellten Beispiel liegt die Querachse 42 unmittelbar hinter der rückwärtigen unteren Kante des Trägers des Rahmens 16. Der Tragarm 36 erstreckt sich von seinem vorderen Ende 38 aus über einen vorderen Endbereich 46 mit im wesentlichen horizontaler Lage bis zu einem nach hinten und nach unten ragenden Mittelabschnitt 48 und von diesem zu dem rückwärtigen Ende 50.

Eine Verbindungsanordnung 56 greift am Mittelabschnitt 48 des Tragarmes 36 an und ist an diesem mittels Schraubbolzen 58 befestigt, wobei durch ein Langloch 120 eine relative Einstellung zwischen Tragarm 36 und Verbindungsanordnung 56 vorgenommen werden kann.

Von ihrer Befestigungsstelle erstreckt sich die Verbindungsanordnung 56 nach oben zu einer Gelenkstelle 64 zwischen der Verbindungsanordnung 56 und dem rückwärtigen Federwiderlager 60 einer Vorspannfederanordnung 80, die oberhalb des Tragarmes 36 angeordnet ist.

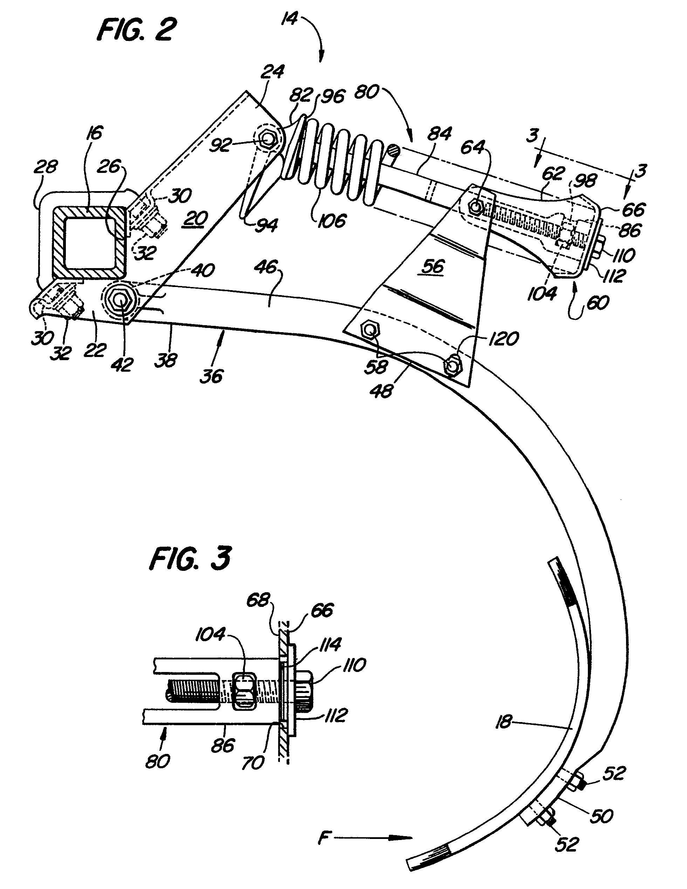

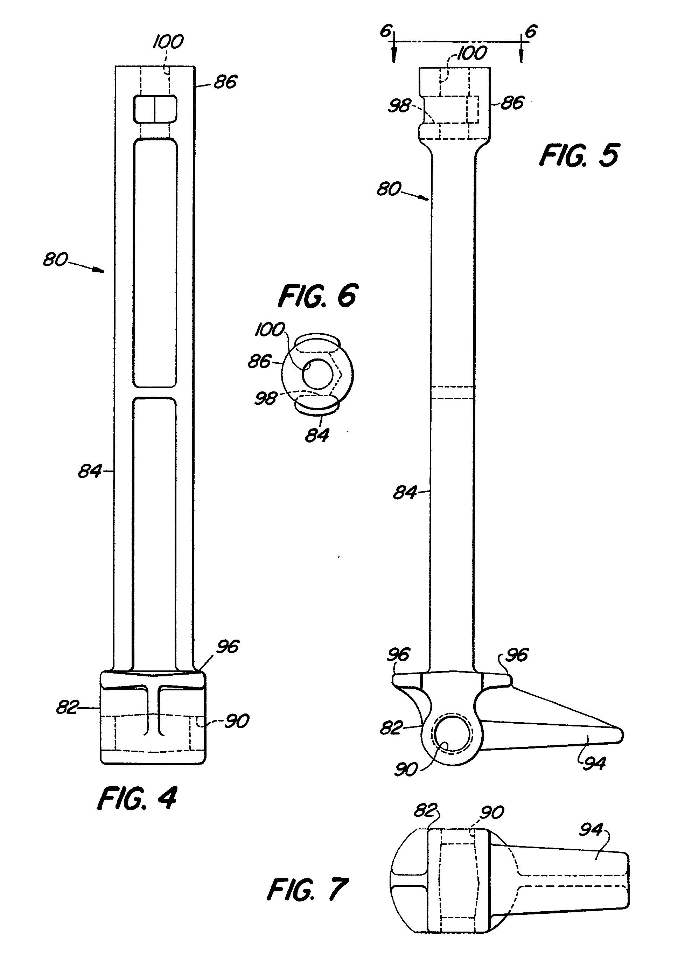

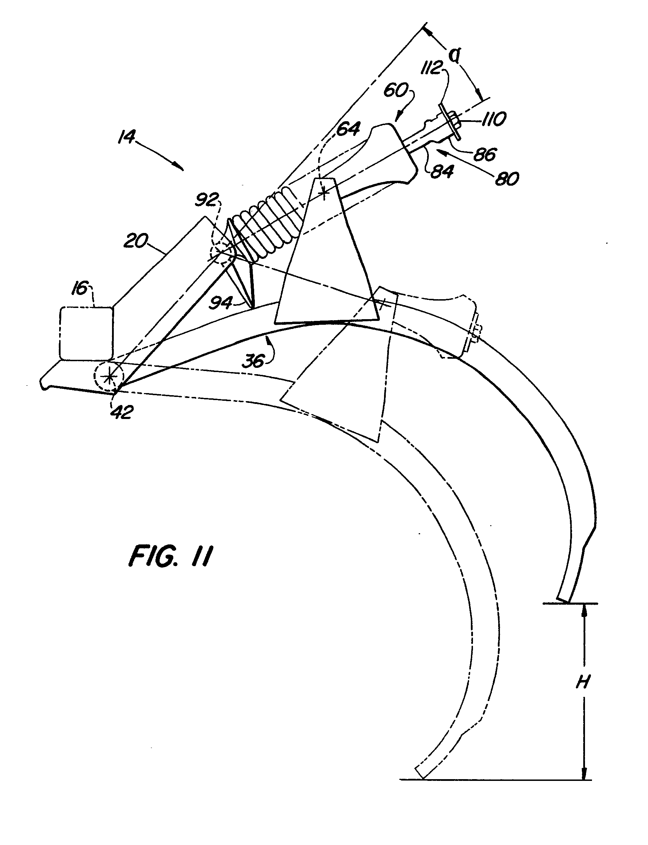

Das rückwärtige Federwiderlager 60 bildet einen U-förmigen Bügelteil, dessen beide nach vorne weisenden Schenkel 62 an ihren freien Enden die Gelenkstelle 64 aufweisen, während der Querteil 66 die nach vorne weisende Federwiderlagerfläche 68 darbietet. Der Querteil 66 ist im wesentlichen kreisscheibenförmig ausgebildet und weist eine zentrale kreisförmige Durchtrittsöffnung 70 auf. Das rückwärtige Federwiderlager 60 gehört zu der Vorspannfederanordnung 80. Diese weist einen Halteteil 82, 84 auf, der im dargestellten Beispiel einstückig ausgebildet und im einzelnen in den Figuren 4 bis 7 dargestellt ist. Der Halteteil weist einen lenkerförmigen Abschnitt 84 auf, dessen rückwärtiges Ende 86 mit dem rückwärtigen Federwiderlager 60 verbunden ist und dessen vorderen Ende 82 als das die nach rückwärts weisende Federwiderlagerfläche 96 aufweisende vordere Federwiderlager ausgebildet ist. Das vordere Ende 82 weist eine Queröffnung 90 für die Querachse 92 auf, mittels der der Halteteil 82, 84 mit dem oberen rückwärtigen Ende 24 der Befestigungseinrichtung 20, 28 schwenkbar verbunden ist. Wie aus Fig. 2 ersichtlich ist, liegt die Querachse 92 oberhalb und rückwärts von der Querachse 42, über die der Tragarm 36 an der Befestigungseinrichtung 20, 28 angelenkt ist. Andererseits liegt die Querachse 92 in Fahrtrichtung vor der Gelenkstelle 64 der schwenkbaren Verbindungsanordnung 56. Mit dem vorderen Ende 82 des Halteteils 82, 84 ist einstückig ein vorspringender Anschlag 94 verbunden, der mit diesem Halteteil zusammen schwenkbar ist und bei dieser Schwenkung zur Begrenzung der maximalen Aushebestellung in die Bahn des Tragarmes 36 bewegbar ist, wie dies Fig. 11 zeigt. Der Halteteil 82, 84 in der in den Figuren 4 bis 7 dargestellten Form kann ein einstückiger Gussteil sein. Am rückwärtigen Ende 86 des Halteteils ist eine Ausnehmung 98 vorgesehen, die eine innere und axial verlaufende Ausnehmung 100 dieses Endes schneidet. In die Ausnehmung ist eine Mutter 104 eingesetzt und gegen relative Drehung durch entsprechende Abflachung in der Ausnehmung gesichert. Eine einzige Schraubenfeder 106 ist über den Halteteil 82, 84 gefädelt und liegt zwischen den Federwiderlagerflächen 96 des Halteteils 82, 84 und 68 des Federwiderlagerteils 60. Ein Schraubbolzen 110 ist durch die Öffnung 70 und 100 gefädelt und in der Mutter 104 schraubbar. Zwischen dem Kopf des Schraubbolzens und der Rückseite des Querteils 66 des rückwärtigen Federwiderlagers 60 liegt eine Unterlegscheibe 112. Statt einer können auch mehrere Unterlegscheiben 114 (Fig. 3) vorgesehen sein, wodurch die Bodeneingriffstiefe des Bodenbearbeitungswerkzeuges 18 in der Arbeitsstellung einreguliert werden kann. Im Einbauzustand ist die einzige Feder 106 zwischen dem Halteteil 82, 84 und dem rückwärtigen Federwiderlager 60 in einem teilweise zusammengedrückten Zustand eingespannt, wobei gleichzeitig die abgesenkte Arbeitsstellung des Bodenbearbeitungswerkzeuges 18 festgelegt ist. Die Breite des Teils 84 des Halteteils 82, 84 ist im wesentlichen gleich der inneren lichten Weite der Schraubenfeder 106, so dass diese zugleich gegen Abknicken gesichert ist. Die Vorspannfederanordnung 80 lässt sich leicht demontieren und wieder zusammenbauen. In der Arbeitsstellung sorgt die Anordnung für eine ausreichend starke Federvorspannung, gegen welche die Trageinrichtung aushebbar ist, ohne dass dadurch auf die Trageinrichtung eine Belastung ausgeübt wird.

Der Federvorspannkraft wirkt die Aushebekraft F nach Fig. 2 entgegen, die bei Betrieb bestrebt ist, den Tragarm 36 durch Schwenken um die Querachse 42 im Gegenuhrzeigersinne in Fig. 2 auszuheben. Wenn die Aushebekraft F einen vorbestimmten Wert überschreitet, wird die durch die Vorspannfederanordnung 80 ausgeübte Federvorspannung überwunden. Im Verlaufe der Aushebebewegung wird aufgrund der Verbindungsanordnung 46 das rückwärtige Federwiderlager 60 in Fig. 2 nach links in Richtung auf das vordere Ende 82 des Halteteils 82, 84 bewegt und die Schraubenfeder 106 weiter zusammengedrückt. Das rückwärtige Federwiderlager 60 gleitet dabei auf dem Halteteil 82, 84. Die Anlenkstelle 64 bewegt sich bei der Aushebebewegung auf einem Kreisbogen, auf dem sie sich bei zunehmender Aushebung der Querachse 92 nähert.

Wenn der Tragarm 36 aus der in Fig. 2 dargestellten Bodenbearbeitungsstellung nach oben ausgehoben wird, z.B. weil das Bodenbearbeitungswerkzeug 18 auf ein Bodenhindernis trifft, nimmt der Kraftarm der Aushebekraft F ebenso wie der Momentarm der Vorspannfederanordnung 80 ab. Dabei nimmt jedoch ausgehend von der Arbeitsstellung nach Fig. 2 der Momentarm zunächst schneller ab als der Kraftarm. Das bedeutet, dass die auf den Tragarm 36 einwirkende Rückstellkraft, die dem Aushebevorgang eine anfänglich hohe Auslösekraft entgegensetzt, bei Beginn der Ausheberschwenkbewegung des Tragarmes 36 zunächst bis zum Erreichen einer mittleren Aushebestellung zunimmt. Die anfängliche Rückstellkraft ist zweckmässigerweise grösser als 363 kg und erreicht in einer bevorzugten Ausführungsform annähernd etwa 544 kg. Die Abhängigkeit der Rückstellkraft von dem Weg der Aushebebewegung zeigt die Kurve 130 in Figur 12. Die vertikale Aushebung in Fig. 12 ist gemessen von der Arbeitsstellung aus. Die Zunahme der wirksamen Rückstellkraft endet bei Erreichen einer mittleren Aushebestellung. Zwischen dieser und der maximalen Aushebestellung nimmt dagegen der Momentarm der Vorspannfederanordnung 80 schneller als der Kraftarm der Aushebekraft F ab. Dabei ist in der mittleren Aushebestellung die wirksame Rückstellkraft kleiner als doppelt so gross wie die anfängliche Auslösekraft. Bis zum Erreichen der maximalen Aushebestellung geht die wirksame Rückstellkraft auf einen Wert zwischen der maximalen Rückstellkraft und dem Wert Null zurück.

Bei der Aushebebewegung des Tragarmes 36 schwenkt auch die Vorspannfederanordnung 80 um die Querachse 92 nach oben. Dabei schwenkt der Anschlag 94 aus einer in der Befestigungseinrichtung 20, 28 verdeckten Stellung nach rückwärts in die Aushebebahn des Tragarmes 36, um dessen Ausschwenkbewegung letztendlich zu begrenzen, bevor die Gelenkstelle 64 die Verlängerung der Verbindungslinie zwischen den Querachsen 42, 92 erreicht (vgl. Fig. 11). Die Vorspannfederanordnung und damit der Tragarm 36 können somit nicht bis in die Totpunktstellung bezogen auf die Querachsen 42, 92 angehoben werden. Vielmehr liegt die maximale Aushebestellung um einen Winkel α vor dieser Totpunktstellung. Auf den Tragarm 36 ist somit auch in der maximalen Aushebestellung eine Rückstellkraft wirksam, die ihn in die Arbeitsstellung zurückzuschwenken sucht.

Aufgrund der besonderen Ausbildung des rückwärtigen Federwiderlagers 60 ergibt sich eine sehr gedrängte Bauweise. Wie Fig. 11 zeigt, liegt in der maximalen Aushebestellung wenigstens ein Drittel der Länge der zusammengepressten Feder 106 im Bereich zwischen den Schenkeln des rückwärtigen Federwiderlagers 60 und damit im Bereich hinter der Gelenkstelle 64. Die Anordnung ist so getroffen, dass die Feder 106 in der Arbeitsstellung um annähernd die Hälfte zwischen ihrer freien Länge und der voll zusammengedrückten Länge zusammengepresst ist. Der Winkel α in Fig. 11 liegt in einer bevorzugten Ausführung zwischen 6° und 11°, wobei in der maximalen Aushebestellung die Feder voll zusammengedrückt ist.

In der bevorzugten Ausführungsform nach Fig. 2, die eine annähernd massstäbliche Wiedergabe der praktischen Ausführungsform ist, liegt die maximale Rückstellkraft zwischen dem 1,4- und dem 2-fachen der anfänglichen Auslösekraft. Bei einer praktischen Ausführungsform liegt die anfängliche Auslösekraft im Bereich von 544 kg, während die maximale Rückstellkraft annähernd 817 kg beträgt. Dies gibt ein Verhältnis zwischen maximaler Rückstellkraft und anfänglicher Auslösekraft von annähernd 1,5:1.

In Fig. 12 zeigt die gestrichelte Kurve 134 die Verhältnisse bei einigen typischen bekannten Bodenbearbeitungsgeräten. Selbst wenn von einer gleichen anfänglichen Auslösekraft ausgegangen wird, wird in den bekannten Fällen bei weitem nicht die hohe Rückstellkraft in einer mittleren Aushebestellung erreicht. Auch in der maximalen Aushebestellung ist die Rückstellkraft wesentlich geringer als bei der Kurve 130 des neuen Bodenbearbeitungsgerätes. Die Verhätlnisse sind auch wesentlich günstiger als bei einer Anordnung, bei der die Rückstellkraft von dem anfänglichen Auslösewert aus ständig abnimmt, wie dies die strichpunktierte Linie 136 zeigt. Andere bekannte Anordnungen zeigen Kraft-Wegkurven wie sie die Kurven 138, 140 und 142 darstellen. Auch von diesen unterscheidet sich die entsprechende Kurve 130 des neuen Bodenbearbeitungsgerätes wesentlich.

Bei normalem Betrieb ist die von der Vorspannfederanordnung 80 gelieferte Federvorspannung ausreichend, um die bei normaler Bodeneindringtiefe der Bodenbearbeitungswerkzeuge 18 auftretende Aushebekraft F zu überwinden. Trifft das Bodenbearbeitungswerkzeug 18 auf einen Widerstand im Boden, nimmt die Aushebekraft F schlagartig zu. Wird die Vorspannkraft von der Vorspannfederanordnung überwunden, wird der Tragarm 36 z.B. um eine Höhe H in Fig. 11 ausgehoben. Diese maximale Aushebehöhe H, die bei einer bevorzugten Ausführungsform etwa 30 cm beträgt, reicht aus, dass das Bodenbearbeitungswerkzeug 18 über das Hindernis hinweggleitet. Die maximale Aushebehöhe wird durch den Anschlag 94 bestimmt. Ist das Bodenhindernis so geartet, dass der Tragarm 36 bei dem angeführten Beispiel um mehr als z.B. 20 cm angehoben werden muss, um über das Hindernis hinwegzugleiten, so nimmt bei der Aushebebewegung über diese 20 cm hinaus die wirksame Rückstellkraft entsprechend dem Kurvenverlauf der Kurve 130 oberhalb des Punktes 132 wieder ab. Der Ausweichbewegung des Tragarmes wird also ein abnehmender Widerstand entgegengesetzt. Kommt der Tragarm 36 vom Hindernis frei, so führt ihn die Vorspannfederanordnung 80 automatisch wieder in die Arbeitsstellung zurück, und zwar zunächst mit zunehmender Rückstellkraft, die bis zu dem niedrigeren Wert der anfänglichen Auslösekraft anschliessend wieder abnimmt. In jedem Fall ist die Rückstellkraft ausreichend, um das Bodenbearbeitungswerkzeug 18 wieder in die volle Eingriffstiefe in den Boden zurückzuführen.

**Patentansprüche**

1. Bodenbearbeitungsgerät mit einem über einen Acker bewegbaren Rahmen (16), an dem mittels einer Befestigungseinrichtung (20, 28) wenigstens eine gegen eine starke Federvorspannung aushebbare Trageinrichtung für ein Bodenbearbeitungswerkzeug (18) befestigbar ist, welche einen Tragarm (36) aufweist, dessen vorderes Ende (38) an der Befestigungseinrichtung (20, 28) um eine Querachse (42) schwenkbar gelagert ist und dessen vorderer Endbereich (46) sich von der Querachse (42) etwa horizontal zu einem nach hinten und nach unten ragenden Mittelabschnitt (48) und von diesem zu einem das Werkzeug (18) aufnehmenden, rückwärtigen Ende (50) erstreckt und der in einer vertikalen Ebene zwischen einer abgesenkten Arbeitsstellung und einer angehobenen Aushebestellung bewegbar ist, mit einer Verbindungsanordnung (56), die am Mittelabschnitt (48) des Tragarmes (36) angreift und mit diesem schwenkbar ist und diesen gelenkig (64) mit dem rückwärtigen Federwiderlager (60) einer Vorspannfederanordnung (80) oberhalb des Tragarmes verbindet, welche eine nach vorne weisende Federwiderlagerfläche (68) an dem rückwärtigen Federwiderlager (60), einen Halteteil (82 und 84) und an diesem eine nach hinten weisende Federwiderlagerfläche (96) aufweist, wobei der Halteteil (82, 84) um eine zweite Querachse (92), die gegenüber der ersten Querachse (42) nach rückwärts und nach oben versetzt an der Befestigungseinrichtung (20, 28) angeordnet ist, schwenkbar gelagert ist, dadurch gekennzeichnet, dass in der Arbeitsstellung die Gelenkstelle (64) der schwenkbaren Verbindungsanordnung (56) in einer horizontalen Ebene zwischen den dazu parallelen horizontalen Ebenen liegt, die durch die erste und zweite Querachse (42, 92) gehen, dass die maximale Aushebestellung auf eine Stellung kurz vor der Totpunkt- oder Fluchtungslage der ersten und zweiten Querachse (42, 92) mit der Gelenkstelle (64) begrenzt ist, und dass der beim Ausheben am Bodenbearbeitungswerkzeug (18) wirkende Kraftarm der Aushebekraft (F) und der Momentarm der Kraft der Vorspannfederanordnung (80) in Verbindung mit der Vorspannkraft so gewählt sind, dass nach Überwinden einer hohen anfänglichen Auslösekraft und bei Beginn der Aushebeschwenkbewegung des Tragarmes (36) der Kraftarm der Aushebekraft (F) zunächst schneller abnimmt als der Momentarm der Vorspannfederanordnung (80) und so die wirksame Rückstellkraft zunächst bis zum Erreichen einer mittleren Aushebestellung zunimmt, zwischen der und der maximalen Aushebestellung der Momentarm der Vorspannfederanordnung (80) dagegen schneller als der Kraftarm der Aushebekraft (F) abnimmt, wobei in der mittleren Aushebestellung die wirksame Rückstellkraft kleiner als doppelt so gross wie die anfängliche Auslösekraft ist und bis zum Erreichen der maximalen Aushebestellung auf einen Wert zwischen der maximalen Rückstellkraft und dem Wert Null zurückgeht.

2. Bodenbearbeitungsgerät nach Anspruch 1, dadurch gekennzeichnet, dass zwischen den beiden Widerlagerflächen (68, 96) nur eine einzige Vorspannfeder (106) eingespannt ist und die anfängliche Auslösekraft grösser als 450 kg ist, vorzugsweise etwa 544 kg beträgt, und die maximale Rückstellkraft zwischen dem 1,4- und dem 2-fachen der anfänglichen Auslösekraft liegt, vorzugsweise das 1,5-fache ausmacht.

3. Bodenbearbeitungsgerät nach Anspruch 1, dadurch gekennzeichnet, dass die wirksame Rückstellkraft in der maximalen Aushebestellung etwa gleich der anfänglichen Auslösekraft ist.

4. Bodenbearbeitungsgerät nach einem der Ansprüche 1 bis 3, dadurch gekennzeichnet, dass die nach vorne weisende Federwiderlagerfläche (68) des rückwärtigen Federwiderlagers (60) im Abstand hinter der Gelenkstelle (64) angeordnet ist, wobei dieser Abstand wenigstens etwa ein Drittel des gegenseitigen Abstandes der Federwiderlagerflächen (68, 69) in der Arbeitsstellung beträgt.

5. Bodenbearbeitungsgerät nach einem der Ansprüche 1 bis 4, dadurch gekennzeichnet, dass das rückwärtige Federwiderlager (60) einen U-förmigen Bügelteil bildet, dessen nach vorne weisenden Schenkel (62) an ihren freien Enden die Gelenkstelle (64) aufweisen und der an seinem Querteil (66) die nach vorne weisende Federwiderlagerfläche (68) darbietet.

6. Bodenbearbeitungsgerät nach Anspruch 5, dadurch gekennzeichnet, dass in der maximalen Aushebestellung wenigstens ein Drittel der Länge der zusammengepressten Feder im Bereich hinter der Gelenkstelle (64) liegt.

7. Bodenbearbeitungsgerät nach Anspruch 1, dadurch gekennzeichnet, dass an dem Halteteil (82, 84) ein vorspringender Anschlag (94) vorgesehen ist, der mit dem Halteteil schwenkbar und bei dieser Schwenkung zur Begrenzung der maximalen Aushebestellung in die Bahn des Tragarmes (36) bewegbar ist.

**Claims**

1. Soil tillage implement with a frame (16) movable over a field and to which at least one supporting arrangement for a soil tilling tool (18) can be fixed by means of a fixing device (20, 28), the supporting arrangement being withdrawable in opposition to a strong spring bias and having a supporting arm (36) whose front end (38) is mounted on the fixing device (20, 28) to swing about a transverse pivot pin (42) and whose front end portion (46) extends approximately horizontally from the transverse pivot pin (42) to a rearwardly and downwardly projecting intermediate section (48) and from the latter to a rear end (50) receiving the tool (18), and which supporting arm is movable in a vertical plane between a lowered working position and a raised position of withdrawal and provided with a connecting arrangement (56) engaging the intermediate section (48) of the supporting arm (36) and swingable with the latter and connecting it in articulated fashion (64) to the rear spring abutment (60) of a biasing spring arrangement (80) above the supporting arm having a forward facing spring abutment surface (68) on the rear spring abutment (60), a retaining element (82 and 84) and a rearward facing spring abutment surface (96) on the retaining element, the retaining element (82, 84) being mounted to swing about a second transverse pivot pin (92) which is arranged on the fixing device (20, 28) off-set to the rear and upward with respect to the first transverse pivot pin (42), characterised in that in the working position the articulation (64) of the swingable connecting arrangement (56) is located in a horizontal plane between the horizontal planes parallel thereto extending through the first and second transverse pivot pins (42, 92), the position of maximum withdrawal is limited to a position shortly before the dead-centre or in-line position of the first and second transverse pivot pins (42, 92) with the articulation (64), and the force arm of the withdrawal force (F) acting at the soil tilling tool (18) on withdrawal and the moment arm of the force of the biasing spring arrangement (80), in conjunction with the biasing force, are so chosen that, after overcoming a high initial release force and on commencement of the swinging withdrawal movement of the supporting arm (36), the force arm of the withdrawal force (F) decreases more quickly at first than the moment arm of the biasing spring arrangement (80) and in this way the effective restoring force increases at first until a mid position of withdrawal is reached, between which and the position of maximum withdrawal, on the other hand, the moment arm of the biasing spring arrangement (80) decreases more quickly than the force arm of the withdrawal force (F), the effective restoring force in the mid position of withdrawal being less than twice as great as the initial release force and declining to a value between the maximum restoring force and zero value until the position of maximum withdrawal is reached.

2. Soil tillage implement according to claim 1, characterised in that only a single biasing spring (106) is clamped between the two abutment surfaces (68, 96) and the initial release force is greater than 450 kg, preferably about 544 kg, and the maximum restoring force is between 1.4 times and twice the initial release force and is preferably 1.5 times that force.

3. Soil tillage implement according to claim 1, characterised in that the effective restoring force in the position of maximum withdrawal is approximately equal to the initial release force.

4. Soil tillage implement according to any one of claims 1 to 3, characterised in that the forward facing spring abutment surface (68) of the rear spring abutment (60) is arranged at a distance behind the articulation (64), this distance being at least about one third of the mutual distance between the spring abutment surfaces (68, 96) in the working position.

5. Soil tillage implement according to any one of claims 1 to 4, characterised in that the rear spring abutment (60) forms a U-shaped stirrup element whose forwardly directed sides (62) have the articulation (64) at their free ends and which presents the forward facing spring abutment surface (68) on its transverse portion (66).

6. Soil tillage implement according to claim 5, characterised in that in the position of maximum withdrawal at least one third of the length of the compressed spring is located in the zone behind the articulation (64).

7. Soil tillage implement according to claim 1, characterised in that on the retaining element (82, 84) there is provided a projecting stop (94) which is swingable with the retaining element and is movable during this swinging action into the path of the supporting arm (36) to limit the position of maximum withdrawal.

**Revendications**

1. Instrument de travail du sol comportant un châssis (16) pouvant être déplacé à travers un champ, auquel peut être fixé, au moyen d'un dispositif ou système de fixation (20, 28), au moins un dispositif de support pour un outil de travail du sol (18) pouvant être relevé contre une forte précontrainte ou sollicitation initiale élastique, qui comporte un bras de support (36) dont l'extrémité antérieure (38) est placée de façon à pouvoir pivoter autour d'un axe transversal (42) sur le dispositif de fixation (20, 28) et dont la zone terminale antérieure (46) s'étend à partir de l'axe transversal (42), sensiblement horizontalement jusqu'à une section intermédiaire (48) dirigée vers l'arrière et vers le bas et de celle-ci jusqu'à une extrémité postérieure (50) recevant l'outil (18), et qui peut être déplacé dans un plan vertical entre une position de travail abaissée et une position de relevage élevée, avec un dispositif ou système de liaison (56) qui s'applique sur la section intermédiaire (48) du bras de support (36) et peut pivoter avec lui et le relie de façon articulée (64) à la portée de ressort postérieure (60) d'un système à ressort de précontrainte ou de sollicitation initiale (80) au-dessus du bras de support, qui comporte une surface de portée ou d'appui de ressort (68) dirigée vers l'avant sur la portée de ressort postérieure (60), une partie de retenue (82 et 84) et, sur celle-ci, une surface de partie ou d'appui de ressort (96) dirigée vers l'arrière, la partie de retenue (82, 84) étant placée de façon à pouvoir pivoter autour d'un second axe transversal (92) placé sur le dispositif de fixation (20, 28) en étant décalé vers l'arrière et vers le haut par rapport au premier axe transversal (42), caractérisé en ce que, dans la position de travail, le point d'articulation (64) du dispositif de liaison pivotant (56) se trouve dans un plan horizontal entre les plans horizontaux parallèles à celui-ci qui passent par le premier axe transversal (42) et le second axe transversal (92), en ce que la position de relevage maximale est limitée à une position située peu avant la position de point mort ou d'alignement du premier axe transversal (42) et du second axe transversal (92) avec le point d'articulation (64), et en ce que le bras de levier effectif de la force de relevage (F) agissant sur l'outil de travail du sol (18) lors du relevage et le bras de levier du moment de la force du système à ressort de précontrainte (80) sont, en liaison avec la force de précontrainte, choisis de façon qu'après avoir vaincu une force de déclenchement initiale élevée et au début du mouvement de pivotement de relevage du bras de support (36), le bras de levier de la force de relevage (F) décroît d'abord plus rapidement que le bras de levier du système à ressort de précontrainte (80), et, ainsi, la force de rappel effective augmente d'abord jusqu'à ce qu'une position de relevage médiane soit atteinte le bras de levier du système à ressort de précontrainte (80) diminuant par contre, entre cette position et la position de relevage maximale, plus rapidement que le bras de levier de la force de relevage (F), la force de rappel effective étant, dans la position de relevage médiane, inférieure au double de la force de déclenchement (de relevage) initiale et revenant, jusqu'à ce que la position de relevage maximale soit atteinte, à une valeur comprise entre la force de rappel maximale et la valeur zéro.

2. Instrument de travail du sol suivant la revendication 1, caractérisé en ce qu'un seul ressort de précontrainte (106) est encastré entre les deux surfaces d'appui (68, 96), et en ce que la force de déclenchement (de relevage) initiale est supérieure à 450 kg, et est de préférence égale à environ 544 kg, tandis que la force de rappel maximale est comprise entre 1,4 fois et 2 fois la force de déclenchement initiale, et est de préférence égale à 1,5 fois celle-ci.

3. Instrument de travail du sol suivant la revendication 1, caractérisé en ce que la force de rappel effective est, dans la position de relevage maximale, sensiblement égale à la force de déclenchement initiale.

4. Instrument de travail du sol suivant l'une des revendications 1 à 3, caractérisé en ce que la surface d'appui de ressort (68) tournée vers l'avant de la portée de ressort postérieure (60) est placée à distance derrière le point d'articulation (64), cette distance étant au moins égale au tiers de la distance mutuelle des surfaces d'appui de ressort (68, 69) dans la position de travail.

5. Instrument de travail du sol suivant l'une des revendications 1 à 4, caractérisé en ce que la portée de ressort postérieure (60) constitue un étrier en U dont les branches (62) dirigées vers l'avant comportent, à leurs extrémités libres, le point d'articulation (64) et qui présente, sur sa traverse (66), la surface d'appui de ressort (68) dirigée vers l'avant.

6. Instrument de travail du sol suivant le revendication 5, caractérisé en ce que, dans la position de relevage maximale, au moins un tiers de la longueur du ressort comprimé se trouve dans la zone située derrière le point d'articulation (64).

7. Instrument de travail du sol suivant la revendication 1, caractérisé en ce qu'il est prévu sur la partie de retenue (82, 84) une butée en saillie (94) qui peut pivoter avec la partie de retenue et, lors de ce pivotement, passer sur le trajet du bras de support (36) pour limiter la position de relevage maximale.

FIG. 1

FIG. 12

FIG. 2

FIG. 3

FIG. 4

FIG. 5

FIG. 6

FIG. 7

## FIG. 10

66
70
60

## FIG. 9

66   68   70
60
62   56
62
64

## FIG. 8

66   70
68
60
62

FIG. 11